# EUROPEAN PATENT APPLICATION

(11) **EP 4 236 441 A1**
(43) Date of publication of application: **30.08.2023**
(21) Application number: 21881898.7
(22) Date of filing: 13.10.2021
(51) Int. Cl.: H04W 28/02

(54) **DATA TRANSMISSION METHOD AND APPARATUS, AND DEVICE**

(30) Priority: 23.10.2020 CN 202011149169
(71) Applicant: Datang Mobile Communications Equipment Co., Ltd., Beijing 100085 (CN)
(72) Inventor: MIAO, Jinhua, Beijing 100085 (CN); BERTRAND, Pierre, Henri, Beijing 100085 (CN); CHEN, Li, Beijing 100085 (CN)
(74) Representative: dompatent von Kreisler Selting Werner - Partnerschaft von Patent- und Rechtsanwälten mbB
(86) International application number: PCT/CN2021/123427
(87) International publication number: WO 2022/083480

(57) **Abstract**

Embodiments of the present disclosure provide a data transmission method, an apparatus, and an equipment, wherein the method includes: a media access control (MAC) layer of the user equipment submits the first data packet to the physical layer of the user equipment and starts the configured grant timer (CGT) and/or the configured grant retransmission timer (CGRT), in a case that the transmission of the first data packet is stopped at the physical layer of the user equipment is identified, the MAC layer of the user equipment stops the CGT and/or CGRT, and transmits the first data packet after stopping CGT and/or CGRT. In the present disclosure, the CGT and/or CGRT is closed and the data continues to be transmitted in a case that the data transmission is stopped, which can complete the data transmission in advance, and save the time delay of data transmission.

## Description

### CROSS REFERENCE OF RELATED APPLICATION

The present application claims a priority of Chinese patent application No. 202011149169.5 and titled "data transmission method, apparatus and equipment" filed with the China Patent Office on October 23, 2020, which is incorporated herein by reference in its entirety.

### TECHNICAL FIELD

The present disclosure relates to the technical field of mobile communication, and in particular, to a data transmission method, an apparatus and an equipment.

### BACKGROUND

In the current transmission mechanism, after the data packet is submitted to the physical layer at the Media Access Control (MAC) layer, the data packet is transmitted to the network device based on the configured grant resource, after partial transmission, the case that transmission of the data packet is stopped may occur. After the transmission of data packet is stopped, the user equipment (User Equipment, UE) will turn on the configured grant timer (Configured Grant Timer, CGT) and/or configured grant retransmission timer (CG-Retransmission Timer, CGRT) at the MAC layer.

If the network device successfully receives the data packet, in the NR-unlicensed spectrum (NR-U) scenario, the network side will feed back the Downlink Feedback Information (DFI), indicating that the data has been successfully received; If the network device cannot successfully receive, in the Industrial Internet of Things (IIoT) scenario, the network side will transmit a retransmission schedule to the UE. However, due to reasons such as the channel, the UE cannot receive the DFI or retransmission scheduling from the network side, so that the UE cannot perform data transmission until the timer expires, which will increase the transmission time delay, especially in a case that the service is an IIoT service, the increase in delay will seriously affect the performance of the service.

### SUMMARY

Embodiments of the present disclosure provide a data transmission method, an apparatus, and an equipment to solve the problem that the existing transmission mechanism increases transmission time delay and affects service performance.

In a first aspect, an embodiment of the present disclosure provides a data transmission method, applied to a user equipment, including:
submitting, by a media access control (MAC) layer of the user equipment, a first data packet to a physical layer of the user equipment, and starting a configured grant timer (CGT) and/or a configured grant retransmission timer (CGRT);
stopping the CGT and/or the CGRT, and transmitting the first data packet after stopping the CGT and/or the CGRT, in a case that the MAC layer of the user equipment identifies that transmission of the first data packet is stopped at the physical layer of the user equipment.

Optionally, the method further comprises:
in a case that a target scenario is detected when transmitting the first data packet at the physical layer of the user equipment, stopping transmission of the first data packet, and feeding back notification information to the MAC layer of the user equipment,
wherein the MAC layer of the user equipment identifies that transmission of the first data packet is stopped according to the notification information.

Optionally, in a case that the target scenario is detected when transmitting the first data packet at the physical layer of the user equipment, the stopping transmission of the first data packet, includes one of:
in a case that a second data packet meeting a preset condition is obtained when transmitting the first data packet at the physical layer of the user equipment, stopping transmission of the first data packet;
in a case that a first indication information transmitted by a network device indicating that the transmission of the first data packet is interrupted is received when transmitting the first data packet at the physical layer of the user equipment, stopping transmission of the first data packet;
in the case that a second indication information transmitted by the network device indicating that the user equipment changes a time slot is received when transmitting the first data packet at the physical layer of the user equipment, stopping transmission of the first data packet.

Optionally, in a case that the second data packet meeting the preset condition is obtained when transmitting the first data packet at the physical layer of the user equipment, stopping transmission of the first data packet, includes:
in a case that a second media access control protocol data unit (MAC PDU) submitted by the MAC layer of the user equipment or an uplink control information (UCI) generated at the physical layer of the user equipment is received when transmitting the first data packet at the physical layer of the user equipment, stopping transmission of the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

Optionally, in a case that the second data packet meeting the preset condition is obtained when transmitting the first data packet at the physical layer of the user equipment, after the stopping transmission of the first data packet, the method further includes:
transmitting the second data packet by the physical layer of the user equipment.

Optionally, the transmission of the first data packet includes:
selecting, by the MAC layer of the user equipment, a second target uplink resource from at least one uplink resource; and
transmitting, by the physical layer of the user equipment, the buffered first data packet to the network device through the second target uplink resource.

Optionally, the first data packet is transmitted to the network device for a first time through the first configured grant resource; the selecting, by the MAC layer of the user equipment, the second target uplink resource from at least one uplink resource, includes:
selecting, by the MAC layer of the user equipment, the second target uplink resource from at least one uplink resource according to at least one of a modulation and coding scheme (MCS) of the uplink resource and a reliability parameter of the uplink resource.

Optionally, the selecting, by the MAC layer of the user equipment, the second target uplink resource from at least one uplink resource according to at least one of the modulation and coding scheme (MCS) of the uplink resource and the reliability parameter of the uplink resource, includes one of:
selecting, by the MAC layer of the user equipment, the second target uplink resource whose MCS is lower than or equal to an MCS corresponding to the first configured grant resource from the at least one uplink resource;
selecting, by the MAC layer of the user equipment, the second target uplink resource whose reliability parameter is higher than or equal to a reliability parameter corresponding to the first configured grant resource from the at least one uplink resource;
selecting, by the MAC layer of the user equipment, the second target uplink resource whose MCS is lower than or equal to the MCS corresponding to the first configured grant resource and whose reliability parameter is higher than or equal to the reliability parameter corresponding to the first configured grant resource from the at least one uplink resource;

Optionally, after the starting, by the MAC layer of the user equipment, the CGT and/or the CGRT, the method further includes:
setting, by the MAC layer of the user equipment, hybrid automatic repeat request (HARQ) process to a non-suspended state capable of transmitting;
after the stopping, by the MAC layer of the user equipment, the CGT and/or the CGRT, the method further includes:
   setting, by the MAC layer of the user equipment, the HARQ process to a suspended state in which data to be transmitted is buffered,
   wherein the MAC layer of the user equipment transmits the first data packet after setting the HARQ process to the suspended state.

In a second aspect, an embodiment of the present disclosure provides a user equipment, including a memory, a transceiver, and a processor, wherein the memory is configured for storing computer program; the transceiver is configured for sending and receiving data under control of the processor; and the processor is configured for reading the computer program in the memory and performing the following operations of:
controlling a media access control (MAC) layer of the user equipment to submit a first data packet to a physical layer of the user equipment, and controlling the MAC layer of the user equipment to start a configured grant timer (CGT) and/or a configured grant retransmission timer (CGRT);
controlling the MAC layer of the user equipment to stop, in a case that transmission of the first data packet is stopped at the physical layer of the user equipment is identified, the CGT and/or the CGRT, and transmit the first data packet after stopping the CGT and/or the CGRT.

Optionally, the processor is further configured for:
controlling the physical layer of the user equipment to stop, in a case that a target scenario is detected when transmitting the first data packet, transmission of the first data packet, and feed back notification information to the MAC layer of the user equipment,
wherein the MAC layer of the user equipment identifies that transmission of the first data packet is stopped according to the notification information.

Optionally, in a case that the processor controls the physical layer of the user equipment to stop the transmission of the first data packet, the processor is specifically configured to perform one of the following methods of:
controlling the physical layer of the user equipment to stop transmission of the first data packet in a case that a second data packet meeting a preset condition is obtained when transmitting the first data packet;
controlling the physical layer of the user equipment to stop transmission of the first data packet in a case that a first indication information transmitted by a network device indicating that the transmission of the first data packet is interrupted is received when transmitting the first data packet;
controlling the physical layer of the user equipment to stop transmission of the first data packet in the case that a second indication information transmitted by the network device indicating that the user equipment changes a time slot is received when transmitting the first data packet.

Optionally, when the processor controls the physical layer of the user equipment to stop, in a case that the second data packet meeting the preset condition is obtained when transmitting the first data packet, transmission of the first data packet, the processor is specially configured for:
controlling the physical layer of the user equipment to stop, in a case that a second media access control protocol data unit (MAC PDU) submitted by the MAC layer of the user equipment or an uplink control information (UCI) generated at the physical layer of the user equipment is received when transmitting the first data packet, transmission of the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

Optionally, after the processor controls the physical layer of the user equipment to stop, in a case that the second data packet meeting the preset condition is obtained when transmitting the first data packet, transmission of the first data packet, the processor is further configured for:
controlling the physical layer of the user equipment to transmit the second data packet.

Optionally, when the processor controls the MAC layer of the user equipment to transmit the first data packet, the processor is specifically configured for:
controlling the MAC layer of the user equipment to select a second target uplink resource from at least one uplink resource; and
controlling the physical layer of the user equipment to transmit the buffered first data packet to the network device through the second target uplink resource.

Optionally, the first data packet is transmitted to the network device for a first time through the first configured grant resource; when the processor controls the MAC layer of the user equipment to select the second target uplink resource from at least one uplink resource, the processor is specially configured for:
controlling the MAC layer of the user equipment to select, according to at least one of a modulation and coding scheme (MCS) of the uplink resource and a reliability parameter of the uplink resource, the second target uplink resource from at least one uplink resource.

Optionally, the processor controls the MAC layer of the user equipment to select, according to at least one of the modulation and coding scheme (MCS) of the uplink resource and the reliability parameter of the uplink resource, the second target uplink resource from at least one uplink resource, the processor is specially configured for performing one of the following methods of:
controlling the physical layer of the user equipment to select the second target uplink resource whose MCS is lower than or equal to an MCS corresponding to the first configured grant resource from the at least one uplink resource;
controlling the physical layer of the user equipment to select the second target uplink resource whose reliability parameter is higher than or equal to a reliability parameter corresponding to the first configured grant resource from the at least one uplink resource;
controlling the physical layer of the user equipment to select the second target uplink resource whose MCS is lower than or equal to the MCS corresponding to the first configured grant resource and whose reliability parameter is higher than or equal to the reliability parameter corresponding to the first configured grant resource from the at least one uplink resource;

Optionally, after the processor controls the MAC layer of the user equipment to start the CGT and/or the CGRT, the processor is further configured for:
controlling the MAC layer of the user equipment to set hybrid automatic repeat request (HARQ) process to a non-suspended state capable of transmitting;
after the processor controls the MAC layer of the user equipment to stop the CGT and/or the CGRT, the processor is further configured for:
   controlling the MAC layer of the user equipment to set the HARQ process to a suspended state in which data to be transmitted is buffered,
   wherein the processor controls the MAC layer of the user equipment to transmit the first data packet after setting the HARQ process to the suspended state.

In a third aspect, an embodiment of the present disclosure provides a data transmission apparatus, applied to a user equipment, including: a media access control (MAC) layer processing module of the user equipment and a physical layer processing module of the user equipment, where
the MAC layer processing module of the user equipment includes:
a first processing submodule, configured to submit a first data packet to the physical layer processing module of the user equipment, and start a configured grant timer (CGT) and/or a configured grant retransmission timer (CGRT); and
a second processing submodule, configured to stop, in a case that transmission of the first data packet is stopped at the physical layer processing module of the user equipment is identified, the CGT and/or the CGRT, and transmit the first data packet after stopping the CGT and/or the CGRT.

Optionally, the physical layer processing module of the user equipment is further configured to:
stop, in a case that a target scenario is detected when transmitting the first data packet, transmission of the first data packet, and feed back notification information to the MAC layer processing module of the user equipment,
wherein the MAC layer processing module of the user equipment identifies that transmission of the first data packet is stopped according to the notification information.

Optionally, the physical layer processing module of the user equipment includes one of the following submodules:
a first stop submodule, configured to stop, in a case that a second data packet meeting a preset condition is obtained when transmitting the first data packet, transmission of the first data packet;
a second stop submodule, configured to stop transmission of the first data packet in a case that a first indication information transmitted by a network device indicating that the transmission of the first data packet is interrupted is received when transmitting the first data packet;
a third stop submodule, configured to stop transmission of the first data packet in the case that a second indication information transmitted by the network device indicating that the user equipment changes a time slot is received when transmitting the first data packet.

Optionally, the first stop submodule is further configured for:
stopping transmission of the first data packet, in a case that a second media access control protocol data unit (MAC PDU) submitted or an uplink control information (UCI) generated by the MAC layer processing module of the user equipment is received when transmitting the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

In a fourth aspect, an embodiment of the present disclosure provides a processor-readable storage medium, wherein the processor-readable storage medium stores a computer program, and when the computer program is executed by the processor, the steps in the data transmission method described in the first aspect above are implemented.

In a fifth aspect, an embodiment of the present disclosure provides a computer program, including computer readable code, wherein the computer readable code enables, when operated on a computing processing device, the computing processing device to execute the data transmission method described in the first aspect above.

In a sixth aspect, an embodiment of the present disclosure provides a computer-readable medium, the computer program as described in the fifth aspect above is stored therein.

In the embodiment of the present disclosure, after the MAC layer of the user equipment submits the first data packet to the physical layer of the user equipment and starts the configured grant timer (CGT) and/or the configured grant retransmission timer (CGRT), in a case that the transmission of the first data packet is stopped at the physical layer of the user equipment is identified, the MAC layer of the user equipment stops the CGT and/or CGRT and transmits the first data packet after stopping CGT and/or CGRT, which can avoid performing data transmission actions after the timer expires, and ensure that the user equipment completes the data transmission in advance, thereby saving time delay.

The above description is only an overview of the technical solution of the present disclosure, in order to better understand the technical means of the present disclosure, it can be implemented according to the contents of the description, and in order to make the above and other purposes, features and advantages of the present disclosure more obvious and understandable, the specific embodiments of the present disclosure are enumerated below.

### BRIEF DESCRIPTION OF THE DRAWINGS

In order to more clearly illustrate the technical solutions in the embodiments of the present disclosure or related technologies, the drawings that need to be used in the descriptions of the embodiments or related technologies will be briefly introduced below, obviously, the drawings in the following description are only some embodiments of the present disclosure. For those ordinarily skilled in the art, without paying creative work, other drawings may also be obtained based on these drawings.
FIG. 1 shows a schematic view of data transmission corresponding to an existing transmission mechanism;
FIG. 2 shows a schematic view of a data transmission method according to an embodiment of the present disclosure;
FIG. 3 shows a first specific implementation flowchart of the data transmission method according to an embodiment of the present disclosure;
FIG. 4 shows a schematic view of data transmission corresponding to the transmission mechanism of the present disclosure;
FIG. 5 shows a second specific implementation flowchart of the data transmission method according to an embodiment of the present disclosure;
FIG. 6 shows a schematic structural view of a data transmission apparatus according to an embodiment of the present disclosure;
FIG. 7 shows a structural block view of a user equipment according to an embodiment of the present disclosure;
FIG. 8 schematically shows a block view of a computing processing device for performing a method according to the present disclosure; and
FIG. 9 schematically shows a storage unit for holding or carrying program codes implementing the method according to the present disclosure.

### DETAILED DESCRIPTION

In order to make the purpose, technical solutions and advantages of the embodiments of the present disclosure clearer, the technical solutions in the embodiments of the present disclosure will be clearly and completely described below in conjunction with the drawings in the embodiments of the present disclosure. Obviously, the described embodiments are parts of the embodiments of the present disclosure, rather than all of embodiments. Based on the embodiments in the present disclosure, all other embodiments obtained by those ordinarily skilled in the art without making creative efforts fall within the protection scope of the present disclosure.

The term "and/or" in the embodiments of the present disclosure describes the association relationship of associated objects, indicating that there may be three relationships, for example, A and/or B, which may mean three cases: A exists alone, A and B exist simultaneously, and B exists alone. The character "/" generally indicates that the contextual associated objects are an "or" relationship.

The term "plurality" in the embodiments of the present disclosure refers to two or more, and other quantifiers are similar.

Embodiments of the present disclosure provide a data transmission method and an apparatus, which are used for realizing the user equipment to complete data transmission in advance and saving time delay.

The method and the apparatus are conceived based on the same application. Since the principles of solving problems of the method and the apparatus are similar, the implementations of the apparatus and the method can be referred to each other, and the repetition will not be repeated.

In addition, the technical solutions provided by the embodiments of the present disclosure may be applicable to various systems, especially 5G systems. For example, the applicable system may be global system of mobile communication (global system of mobile communication, GSM) system, code division multiple access (code division multiple access, CDMA) system, wideband code division multiple access (Wideband Code Division Multiple Access, WCDMA) general packet radio service (general packet radio service, GPRS) system, long term evolution (long term evolution, LTE) system, LTE frequency division duplex (frequency division duplex, FDD) system, LTE time division duplex (time division duplex, TDD) system, Long term evolution advanced (LTE-A) system, universal mobile telecommunications system (UMTS), worldwide interoperability for microwave access (WiMAX) system, 5G New Radio (New Radio, NR) system, etc. These various systems include terminal devices and network devices. The system may also include a core network part, such as an evolved packet system (Evloved Packet System, EPS), a 5G system (5GS), and the like.

The terminal device involved in the embodiments of the present disclosure may be a device that provides voice and/or data connectivity to users, a handheld device with a radio connection function, or other processing devices connected to a radio modem. In different systems, the name of the user equipment may be different. For example, in a 5G system, a terminal device may be called a user equipment. The radio terminal equipment can communicate with one or more core networks (Core Network, CN) via the radio access network (Radio Access Network, RAN), and the radio terminal equipment may be a mobile terminal equipment, such as a mobile phone (or called a "cellular "telephones) and computers with mobile terminal equipment, such as portable, pocket, hand-held, computer built-in or vehicle-mounted mobile devices, which exchange language and/or data with the radio access network. For example, Personal Communication Service (PCS) phones, cordless phones, Session Initiated Protocol (SIP) phones, Wireless Local Loop (WLL) stations, Personal Digital Assistant, PDA) and other devices. Radio terminal equipment may also be called system, subscriber unit, subscriber station, mobile station, mobile station, remote station, access point, a remote terminal, an access terminal (access terminal), a user terminal, a user agent, and a user device, which are not limited in the embodiments of the present disclosure.

The network device involved in the embodiments of the present disclosure may be a base station, and the base station may include multiple cells that provide services for terminals. Depending on the specific application scenario, the base station can also be called an access point, or can be a device in the access network that communicates with the radio terminal device through one or more sectors on the air interface, or other names. Network devices can be used to interchange received over-the-air frames with Internet Protocol (IP) packets and act as router between radio terminal device and the rest of the access network, wherein the rest of the access network can include the Internet Protocol (IP) communication network. Network devices may also coordinate attribute management for the air interface. For example, the network device involved in this embodiment of the present disclosure may be a network device (Base Transceiver Station, BTS) in Global System for Mobile communications (GSM) or Code Division Multiple Access (CDMA), or a network device (NodeB) in Wide-band Code Division Multiple Access (WCDMA), or an evolved network device (evolutional Node B, eNB or e-NodeB) in a long term evolution (LTE) system, 5G base station (gNB) in the 5G network architecture (next generation system), can also be a home evolved base station (Home evolved Node B, HeNB), relay node (relay node) , a home base station (femto), a pico base station (pico), etc., are not limited in this embodiment of the present disclosure. In some network structures, a network device may include a centralized unit (centralized unit, CU) node and a distributed unit (distributed unit, DU) node, and the centralized unit and the distributed unit may also be arranged geographically separately.

One or more antennas can be used between network devices and terminal devices for Multi Input Multi Output (MIMO) transmission, and MIMO transmission can be Single User MIMO (Single User MIMO, SU-MIMO) or Multi-User MIMO (Multiple User MIMO, MU-MIMO). According to the shape and number of root antenna combinations, MIMO transmission can be 2D-MIMO, 3D-MIMO, FD-MIMO, or massive-MIMO, or diversity transmission, precoding transmission, or beamforming transmission, etc.

Firstly, the existing transmission mechanism is described. For the configured grant (Configured Grant, CG), it is different from different from allocating radio resources to the UE once per time slot/transmission timing interval (Transmission Timing Interval, TTI) during dynamic scheduling (specified through the physical downlink control channel (Physical downlink control channel, PDCCH)), the configured grant allows semi-static configuration of radio resource, and the resource is periodically allocated to a specific UE. In short, the network side notifies the UE that a certain resource can be used periodically, and the location of the periodic resource can be notified through radio resource control (Radio Resource Control, RRC) signaling. The network side may also notify information such as frequency domain position, start and end time, modulation coding scheme (Modulation Coding Scheme, MCS) of resources used to the UE. In this way, the network side reduces the PDCCH notification overhead through periodic resource allocation.

The configured grant scheduling scheme is suitable for periodic service, such as VoIP (Voice Over IP, VoIP), and certain Ultra Reliable Low Latency Communications (Ultra Reliable Low Latency Communications, URLLC) services have services such as periodic control signaling, etc. The configured grant is an uplink scheduling scheme, and there are two types: typel and type2.
In Type!: RRC allocates periodic resources, and after RRC configuration, the resources are in an activated state, that is, after receiving the RRC configured message, the UE can use the resources to transmit uplink data;
In Type2, RRC allocates periodic resources, but the initial state is inactive, the network side needs to activate the resources through physical layer signaling, after the data transmission is completed, the downlink control information (DCI) is used to activate the resources. Similarly, the configured information of some configured grants may also be modified through physical layer signaling, such as modifying time-frequency domain location information of resources.

For CGT, in New Radio (NR), there is no downlink (Downlink, DL) feedback for uplink (UpLink, UL) data transmission. If the UL transmission fails, the network side transmits a retransmission scheduling command through the PDCCH. If the UL data transmission is successful, in a case that the network side feeds back the PDCCH, then the purpose of saving PDCCH overhead cannot be achieved, so a CGT is defined, and the timer is turned on after the UE transmits a data packet. If the UE receives the retransmission schedule of the Hybrid Automatic Repeat Request (HARQ) process before the CGT expires, the UE will perform the retransmission operation. If the UE does not receive the retransmission scheduling from the network side, the UE will consider the data transmission successful after the CGT expires.

For CGRT, CGRT is introduced in NR-U. This is because, in NR-U, the HARQ process identity number (Identity Document, ID) is independently selected by the UE. When the network side cannot receive the data packet of UE, retransmission scheduling cannot be performed, so the mechanism introduced in NR-U is that the network side transmits the feedback signaling DFI to the UE. However, since the NR-U channel is preemptive, the UE may not be able to receive DFI, so CGRT is introduced. This timer is turned on after the UE transmits a data packet. When the timer does not expire and the UE receives DFI (correct feedback), the UE will stop the timer. If the timer still cannot receive DFI after the timer expires, the UE will perform a retransmission operation.

In the existing transmission mechanism, in a case that the data packet of UE is submitted to the physical layer at the MAC layer, when the physical layer transmits the data packet, the current protocol data unit (Protocol Data Unit, PDU) transmission may be interrupted, for example, data transmission preemption occurs.

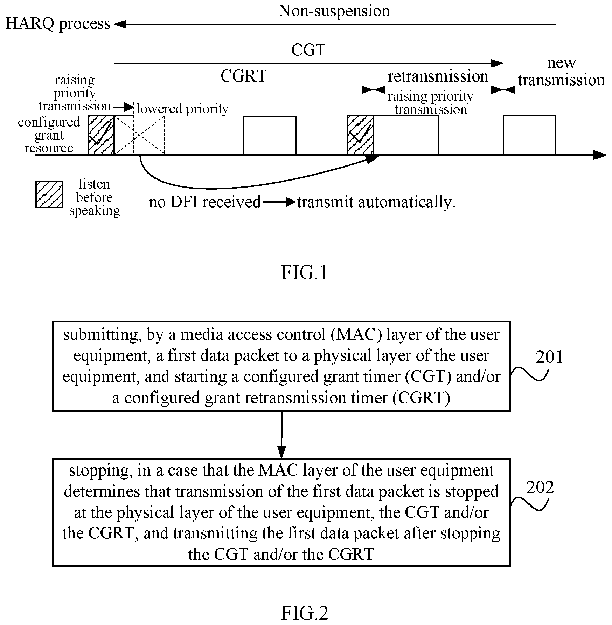

For example, as shown in FIG. 1, data packet A is submitted from the MAC layer to the physical layer, and the timer CGT/CGRT is started, but preemption occurs at the physical layer, that is, the physical layer transmits data B with a higher priority preferentially. However, due to reasons such as the channel, the UE does not receive the DFI for the data packet A transmitted by the network side, so that the UE can only retransmit the data packet A after the timer CGRT expires, which increases the delay of data transmission.

It can be seen that the existing transmission mechanism has the problem of increasing transmission time delay and affecting service performance. In order to solve the problem existing in the existing transmission mechanism, an embodiment of the present disclosure provides a data transmission method, an apparatus and an equipment.

FIG. 2 shows a flowchart of a data transmission method provided by an embodiment of the present disclosure, the method is applied to a user equipment, wherein the user equipment includes a MAC layer of the user equipment and a physical layer of the user equipment, and the method includes:
step 201, submitting, by a media access control (MAC) layer of the user equipment, a first data packet to a physical layer of the user equipment, and starting a configured grant timer (CGT) and/or a configured grant retransmission timer (CGRT).

The MAC layer of the user equipment first submits the first data packet to the physical layer of the user equipment, so that the physical layer of the user equipment transmits the received first data packet to a network device. After the MAC layer of the user equipment submits the first data packet to the physical layer of the user equipment, the CGT and/or the CGRT can be started.

Step 202, stopping the CGT and/or the CGRT and transmitting the first data packet after stopping the CGT and/or the CGRT, in a case that the MAC layer of the user equipment identifies that transmission of the first data packet is stopped at the physical layer of the user equipment.

After submitting the first data packet to the physical layer of the user equipment, the MAC layer of the user equipment may stop the CGT and/or the CGRT in a case that the transmission of the first data packet is stopped at the physical layer of the user equipment is identified. Specifically, in a case that CGT is started after transmitting the first data packet previously, CGT is stopped at this time, in a case that CGRT is started after transmitting the first data packet previously, CGRT is started at this time, in a case that CGRT and CGT are started after transmitting the first data packet previously, then CGRT and CGT are stopped at this time. After stopping the CGT and/or CGRT, the MAC layer of the user equipment may transmit the first data packet. The CGT and/or CGRT is stopped, and the first data packet is transmitted after stopping the CGT and/or CGRT, which can avoid performing data transmission actions after the timer expires, thereby ensuring that the user equipment completes the data transmission in advance, and saving time delay.

In the embodiment of the present disclosure, after the MAC layer of the user equipment submits the first data packet to the physical layer of the user equipment and starts the CGT and/or CGRT, in a case that the transmission of first data packet is stopped at the physical layer of the user equipment, the CGT and/or CGRT is stopped and the first data packet is transmitted after the CGT and/or CGRT stops, which can avoid performing data transmission actions after the timer expires, thereby ensuring that the user equipment completes data transmission in advance, and saving time delay.

In an optional embodiment of the present disclosure, the method further includes:
in a case that a target scenario is detected when transmitting the first data packet at the physical layer of the user equipment, stopping transmission of the first data packet, and feeding back notification information to the MAC layer of the user equipment,
wherein the MAC layer of the user equipment identifies that transmission of the first data packet is stopped according to the notification information.

After the MAC layer of the user equipment submits the first data packet to the physical layer of the user equipment, the physical layer of the user equipment can transmit the received first data packet to the network device, in a case that the target scenario is detected when transmitting the first data packet, the physical layer of the user equipment stops the transmission of first data packet, and feeds back the notification information of stopping transmission of the first data packet to the MAC layer of the user equipment. After receiving the notification information fed back by the physical layer of the user equipment, the MAC layer of the user equipment may know that the transmission of first data packet is stopped at the physical layer of the user equipment, and at this time, the MAC layer of the user equipment may stop the CGT and/or CGRT and transmit the first data packet after stopping the CGT and/or CGRT.

In the embodiment of the present disclosure, in a case that the target scenario is detected when transmitting the first data packet, the physical layer of the user equipment stops the transmission of the first data packet to the network device and notifies the MAC layer of the user equipment, so that the MAC layer of the user equipment can know the transmission status of the first data packet in time, and then collect corresponding measures to ensure the data transmission of the user equipment and save time delay.

In an optional embodiment of the present disclosure, in a case that a target scenario is detected when transmitting the first data packet, the physical layer of the user equipment stops the transmission of the first data packet, including one of the following methods of:
in a case that a second data packet meeting a preset condition is obtained when transmitting the first data packet at the physical layer of the user equipment, stopping transmission of the first data packet;
in a case that a first indication information transmitted by a network device indicating that the transmission of the first data packet is interrupted is received when transmitting the first data packet at the physical layer of the user equipment, stopping transmission of the first data packet;
in the case that a second indication information transmitted by the network device indicating that the user equipment changes a time slot is received when transmitting the first data packet at the physical layer of the user equipment, stopping transmission of the first data packet.

The physical layer of the user equipment can stop, in a case that the second data packet meeting the preset condition is obtained when transmitting the first data packet, the transmission of the first data packet to the network device, wherein the second data packet may be another data packet submitted by the MAC layer of the user equipment to the physical layer of the user equipment, or may be a data packet generated by the physical layer of the user equipment itself. That is, in the process of transmitting the first data packet to the network device by the physical layer of the user equipment, in a case that the second data packet meeting the preset condition submitted by the MAC layer of the user equipment is received, the transmission of the first data packet to the network device may be stopped. Or, during the process of transmitting the first data packet to the network device by the physical layer of the user equipment, in a case that the physical layer of the user equipment generates a second data packet meeting a preset condition, the transmission of the first data packet to the network device may be stopped.

In a case that the first indication information transmitted by a network device indicating that the transmission of the first data packet is interrupted is received when transmitting the first data packet, the physical layer of the user equipment stops transmission of the first data packet to the network device; that is, during the process of transmitting the first data packet to the network device by the physical layer of the user equipment, in a case that the first indication information transmitted by the network device indicating that the transmission of the first data packet is interrupted is received, the transmission of the first data packet to the network device may be stopped according to the first indication information transmitted by the network device.

In a case that the second indication information transmitted by the network device indicating that the user equipment changes a time slot is received when transmitting the first data packet, the physical layer of the user equipment may stop transmission of the first data packet to the network device. That is, during the process of transmitting the first data packet to the network device by the physical layer of the user equipment, in a case that the second indication information transmitted by the network device indicating that the user equipment changes a time slot is received, the transmission of the first data packet to the network device may be stopped according to the second indication information transmitted by the network device.

In the embodiment of the present disclosure, the transmission of the first data packet to the network device may be stopped based on the acquisition condition of the data packet or the instruction of the network device, so as to realize the control of stopping transmission of the first data packet according to the trigger of the user equipment or the network device.

In an optional embodiment of the present disclosure, in a case that the second data packet meeting the preset condition is obtained when transmitting the first data packet at the physical layer of the user equipment, the stopping transmission of the first data packet, includes:
in a case that a second media access control protocol data unit (MAC PDU) submitted by the MAC layer of the user equipment or an uplink control information (UCI) generated at the physical layer of the user equipment is received when transmitting the first data packet at the physical layer of the user equipment, stopping transmission of the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

The data packets submitted by the MAC layer of the user equipment to the physical layer of the user equipment are all MAC PDUs, so the first data packet is the first MAC PDU, and in a case that the second data packet is a data packet submitted by the MAC layer of the user equipment to the physical layer of the user equipment, then the second data packet is a second MAC PDU, wherein the first data packet is transmitted to the network device through the first configured grant resource, the second data packet is transmitted to the network device through the first target uplink resource, the configured grant resource is selected from the uplink resource, and the configured grant resource may be used periodically to save PDCCH overhead.

In a case that the second data packet is the second MAC PDU, the transmission of the first data packet to the network device is stopped according to the second data packet meeting the preset condition, the specific process may be as follows: in a case that the physical layer of the user equipment receives the second MAC PDU submitted by the MAC layer of the user equipment when transmitting the first data packet, and the priority of the second MAC PDU is higher than the priority of the first data packet (the first MAC PDU), the transmission of the first data packet may be stopped. The specific process may also be as follows: in a case that the physical layer of the user equipment receives the second MAC PDU submitted by the MAC layer of the user equipment when transmitting the first data packet, and the priority of the first target uplink resource configured for transmitting the second MAC PDU is higher the priority of the first configured grant resource configured for transmitting the first data packet, then the transmission of the first data packet may be stopped. The specific process may also be as follows: in a case that the physical layer of the user equipment receives the second MAC PDU submitted by the MAC layer of the user equipment when transmitting the first data packet, and the priority of the first target uplink resource configured for transmitting the second MAC PDU is higher the priority of the first configured grant resource configured for transmitting the first data packet, and simultaneously, the priority of the second MAC PDU is higher than the priority of the first data packet, then the transmission of the first data packet may be stopped.

In the case that the second data packet is uplink control information (Uplink Control Information, UCI) generated by the physical layer of the user equipment, the transmission of the first data packet to the network device can be stopped according to the second data packet meeting the preset condition, and the specific process may be as follows: in a case that the physical layer of the user equipment generates UCI when transmitting the first data packet, and the priority of the UCI generated by the physical layer of the user equipment is higher than the priority of the first data packet (the first MAC PDU), then the transmission of the first data packet may be stopped. The specific process may also be as follows: in a case that the physical layer of the user equipment generates UCI when transmitting the first data packet, and the priority of the first target uplink resource configured for transmitting UCI is higher than the priority of the first configured grant resource configured for transmitting the first data packet, then the transmission of the first data packet may be stopped. The specific process may also be as follows: in a case that the physical layer of the user equipment generates UCI when transmitting the first data packet, and the priority of the first target uplink resource configured for transmitting the UCI generated by the physical layer of the user equipment is higher than the priority of the first configured grant resource configured for transmitting the first data packet, and simultaneously, the priority of the UCI generated by the physical layer of the user equipment is higher than the priority of the first data packet, then the transmission of the first data packet may be stopped.

In the embodiment of the present disclosure, the stopping transmission of the first data packet may be triggered based on the priority of the second MAC PDU and/or the priority of the first target uplink resource configured for transmitting the second MAC PDU, or, the stopping transmission of the first data packet may be triggered based on the priority of the UCI and/or the priority of the first target uplink resource configured for transmitting the UCI, so as to trigger the stopping transmission of the first data packet according to the data and/or uplink resource with higher priority.

In an optional embodiment of the present disclosure, in a case that the second data packet meeting the preset condition is obtained when transmitting the first data packet at the physical layer of the user equipment, after the stopping transmission of the first data packet, the method further comprises:
transmitting the second data packet by the physical layer of the user equipment.

For the situation that the physical layer of the user equipment obtains the second data packet meeting the preset condition when transmitting the first data packet, the physical layer of the user equipment may transmit the second data packet to the network device after stopping the transmission of the first data packet. Here, the second data packet meeting the preset condition is that: the priority of the data packet is higher than the priority of the first data packet and/or the priority of the uplink resource configured for transmitting the data packet is higher than the priority of the uplink resource configured for transmitting the first data packet. By transmitting the second data packet to the network device, the physical layer of the user equipment may transmit a data packet with a higher priority and/or transmit a data packet with a higher priority of uplink resource.

In an optional embodiment of the present disclosure, the transmission of the first data packet includes:
selecting, by the MAC layer of the user equipment, a second target uplink resource from at least one uplink resource; and
transmitting, by the physical layer of the user equipment, the buffered first data packet to the network device through the second target uplink resource.

When the MAC layer of the user equipment needs to select the second target uplink resource from at least one uplink resource first when transmitting the first data packet, after the second target uplink resource is determined, the user equipment can use the second target uplink resource to transmit the first data packet buffered in the MAC layer of the user equipment to the network device. Specifically, after the MAC layer of the user equipment determines the second target uplink resource, the physical layer of the user equipment transmits the first data packet buffered in the MAC layer of the user equipment to the network device through the second target uplink resource determined by the MAC layer of the user equipment.

In an optional embodiment of the present disclosure, the first data packet is transmitted to the network device for a first time through the first configured grant resource; the selecting, by the MAC layer of the user equipment, the second target uplink resource from at least one uplink resource, includes:
selecting, by the MAC layer of the user equipment, the second target uplink resource from at least one uplink resource according to at least one of a modulation and coding scheme (MCS) of the uplink resource and a reliability parameter of the uplink resource.

In a case that the first data packet is transmitted to the network device for the first time through the first configured grant resource, the MAC layer of the user equipment selects the second target uplink resource from at least one uplink resource, the second target uplink resource may be selected from at least one uplink resource according to the MCS of the uplink resource, or the second target uplink resource may be selected from at least one uplink resource according to the reliability parameter of the uplink resource, or the second target uplink resource may be selected from at least one uplink resource according to the MCS of the uplink resource and the reliability parameter of the uplink resource. The second target uplink resource may be selected based on at least one of the MCS of the uplink resource and the reliability parameter of the uplink resource, which enriches the selection manners of the second target uplink resource.

The selecting, by the MAC layer of the user equipment, the second target uplink resource from at least one uplink resource according to at least one of the modulation and coding scheme (MCS) of the uplink resource and the reliability parameter of the uplink resource, includes one of:
selecting, by the MAC layer of the user equipment, the second target uplink resource whose MCS is lower than or equal to an MCS corresponding to the first configured grant resource from the at least one uplink resource;
selecting, by the MAC layer of the user equipment, the second target uplink resource whose reliability parameter is higher than or equal to a reliability parameter corresponding to the first configured grant resource from the at least one uplink resource;
selecting, by the MAC layer of the user equipment, the second target uplink resource whose MCS is lower than or equal to the MCS corresponding to the first configured grant resource and whose reliability parameter is higher than or equal to the reliability parameter corresponding to the first configured grant resource from the at least one uplink resource;

In a case that the second target uplink resource is selected according to at least one of the MCS of the uplink resource and the reliability parameter of the uplink resource, one of the following solutions may be used for selection.

The MAC layer of the user equipment selects an uplink resource whose MCS is lower than or equal to the MCS corresponding to the first configured grant resource from at least one uplink resource, and uses the selected uplink resource as the second target uplink resource, in a case that at least two uplink resources meeting the requirements may be selected according to the MCS, the uplink resource selected for the first time may be determined as the second target uplink resource, or the second target uplink resource may be determined from at least two uplink resources meeting the requirements based on a preset policy.

The MAC layer of the user equipment selects an uplink resource whose reliability parameter is higher than or equal to the reliability parameter corresponding to the first configured grant resource from at least one uplink resource, and uses the selected uplink resource as the second target uplink resource, in a case that at least two uplink resources meeting the requirements may be selected according to the reliability parameters, the uplink resource selected for the first time may be determined as the second target uplink resource, or the second target uplink resource may be determined from at least two uplink resources meeting requirements based on a preset policy.

The MAC layer of the user equipment selects an uplink resource whose MCS is lower than or equal to the MCS corresponding to the first configured grant resource and whose reliability parameter is higher than or equal to the reliability parameter corresponding to the first configured grant resource from at least one uplink resource, and uses the selected uplink resource as the second target uplink resource, in a case that at least two uplink resources meeting the requirements can be selected according to the MCS and the reliability parameters, the uplink resource selected for the first time can be determined as the second target uplink resource, or the second target uplink resource may be determined from at least two uplink resources meeting requirements based on a preset policy.

It should be noted that due to the reduced MCS, the reliability of the uplink resource is higher, so the uplink resource whose MCS is lower than or equal to the MCS corresponding to the first configured grant resource is selected. The reliability parameter may be a parameter configured by the network device for uplink resource. The larger the reliability parameters is, the higher the reliability is. For example, it may be some level parameters, 0, 1, 2, 3, etc., wherein 0 means the lowest reliability, and the larger the number is, and the higher the reliability is.

In the embodiment of the present disclosure, the second target uplink resource is selected from the uplink resources based on at least one of the MCS and the reliability parameter, which can realize a selection for a resource with high reliability on the basis of enriching the selection manners of the second target uplink resource.

In an optional embodiment of the present disclosure, after the starting, by the MAC layer of the user equipment, the CGT and/or the CGRT, the method further includes:
setting, by the MAC layer of the user equipment, hybrid automatic repeat request (HARQ) process to a non-suspended state capable of transmitting;
after the stopping, by the MAC layer of the user equipment, the CGT and/or the CGRT, the method further includes:
   setting, by the MAC layer of the user equipment, the HARQ process to a suspended state in which data to be transmitted is buffered,
   wherein the MAC layer of the user equipment transmits the first data packet after setting the HARQ process to the suspended state.

After starting the CGT and/or CGRT, the MAC layer of the user equipment needs to set the HARQ process to a non-suspended state capable of transmitting, and data buffered in HARQ has been transmitted may be represented by setting the state of the HARQ process. After stopping CGT and/or CGRT, the MAC layer of the user equipment needs to set the HARQ process to the suspended state in which data to be transmitted is buffered, and data to be transmitted is buffered in HARQ may be represented by setting the state of the HARQ process, after setting the HARQ process to a suspended state in which data to be transmitted is buffered, the buffered first data packet may be transmitted.

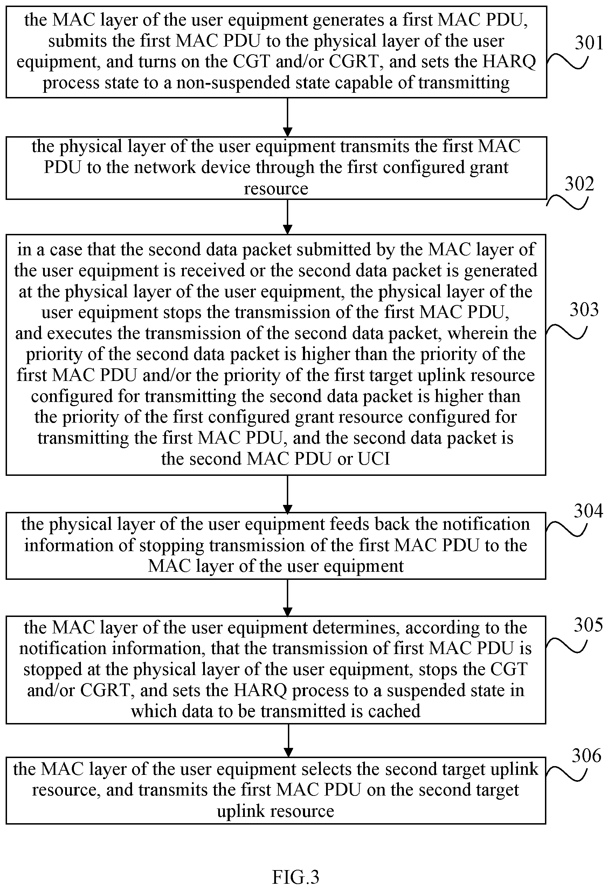

The data transmission method provided by the embodiments of the present disclosure will be described below through two specific processes. Regarding the situation that the physical layer of the user equipment obtains the second data packet meeting the preset condition when transmitting the first data packet, the specific process of the data transmission method is shown in FIG. 3.

Step 301, the MAC layer of the user equipment generates a first MAC PDU, submits the first MAC PDU to the physical layer of the user equipment, and turns on the CGT and/or CGRT, and sets the HARQ process state to a non-suspended state capable of transmitting.

Step 302, the physical layer of the user equipment transmits the first MAC PDU to the network device through the first configured grant resource.

Step 303, in a case that the second data packet submitted by the MAC layer of the user equipment is received or the second data packet is generated at the physical layer of the user equipment, the physical layer of the user equipment stops the transmission of the first MAC PDU, and executes the transmission of the second data packet, wherein the priority of the second data packet is higher than the priority of the first MAC PDU and/or the priority of the first target uplink resource configured for transmitting the second data packet is higher than the priority of the first configured grant resource configured for transmitting the first MAC PDU, and the second data packet is the second MAC PDU or UCI.

Step 304, the physical layer of the user equipment feeds back the notification information of stopping transmission of the first MAC PDU to the MAC layer of the user equipment.

Step 305, the MAC layer of the user equipment determines that the transmission of first MAC PDU is stopped at the physical layer of the user equipment according to the notification information, stops the CGT and/or CGRT, and sets the HARQ process to a suspended state in which data to be transmitted is buffered.

Step 306, the MAC layer of the user equipment selects the second target uplink resource, and transmits the first MAC PDU on the second target uplink resource.

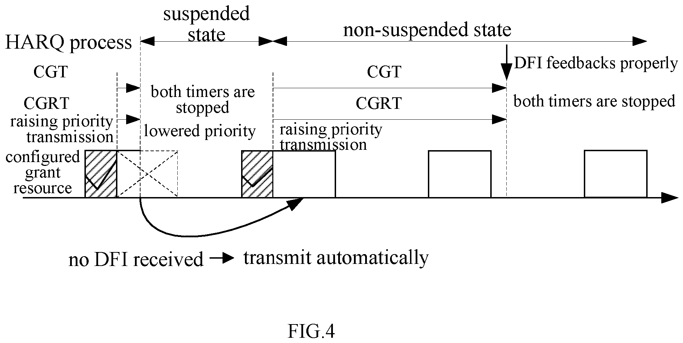

The transmission mechanism corresponding to the above-mentioned implementation process can be referred in FIG. 4, the data packet is submitted from the MAC layer to the physical layer, and CGT and CGRT are turned on, but transmission interruption occurs at the physical layer (the physical layer transmits other data preferentially or interrupts, according to the instructions of the network device, the current data transmission), the MAC layer turns off CGT and CGRT, transmits data packet, so as to reduce the time delay of data transmission.

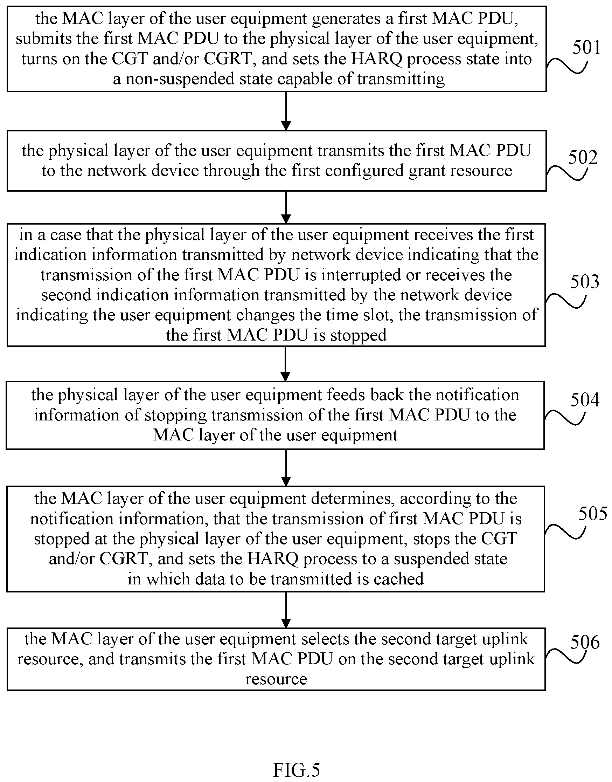

For the case wherein the physical layer of the user equipment receives the first indication information indicating that the transmission of the first data packet is interrupted or the second indication information transmitted by the network device indicating the user equipment changes the time slot when transmitting the first data packet, the specific process of the data transmission method is shown in FIG. 5.

Step 501, the MAC layer of the user equipment generates a first MAC PDU, submits the first MAC PDU to the physical layer of the user equipment, and turns on the CGT and/or CGRT, and sets the HARQ process state to a non-suspended state capable of transmitting.

Step 502, the physical layer of the user equipment transmits the first MAC PDU to the network device through the first configured grant resource.

Step 503, in a case that the physical layer of the user equipment receives the first indication information transmitted by network device indicating that the transmission of the first MAC PDU is interrupted or receives the second indication information transmitted by the network device indicating the user equipment changes the time slot, the transmission of the first MAC PDU is stopped.

Step 504, the physical layer of the user equipment feeds back the notification information of stopping transmission of the first MAC PDU to the MAC layer of the user equipment.

Step 505, the MAC layer of the user equipment determines that the transmission of first MAC PDU is stopped at the physical layer of the user equipment according to the notification information, stops the CGT and/or CGRT, and sets the HARQ process to a suspended state in which data to be transmitted is buffered.

Step 506, the MAC layer of the user equipment selects the second target uplink resource, and transmits the first MAC PDU on the second target uplink resource.

The transmission mechanism corresponding to the implementation process may also be shown in FIG. 4.

The above is the overall implementation process of the data transmission method provided by the embodiment of the present disclosure. After the MAC layer of the user equipment submits the first data packet to the physical layer of the user equipment and starts the CGT and/or CGRT, in a case that the transmission of first data packet is stopped at the physical layer of the user equipment is identified, stopping the CGT and/or the CGRT to stop and transmit the first data packet can avoid performing the data transmission action after the timer expires and ensure that the user equipment completes the data transmission in advance to save time delay. Further, the present disclosure can realize the control of stopping transmission of the first data packet according to the trigger of the user equipment or the network equipment, and can also realize the selection of highly reliable resources on the basis of enriching the selection manners of the second target uplink resource.

The data transmission method provided by the embodiment of the present disclosure is described above, and the data transmission apparatus provided by the embodiment of the present disclosure will be described below with reference to the drawings.

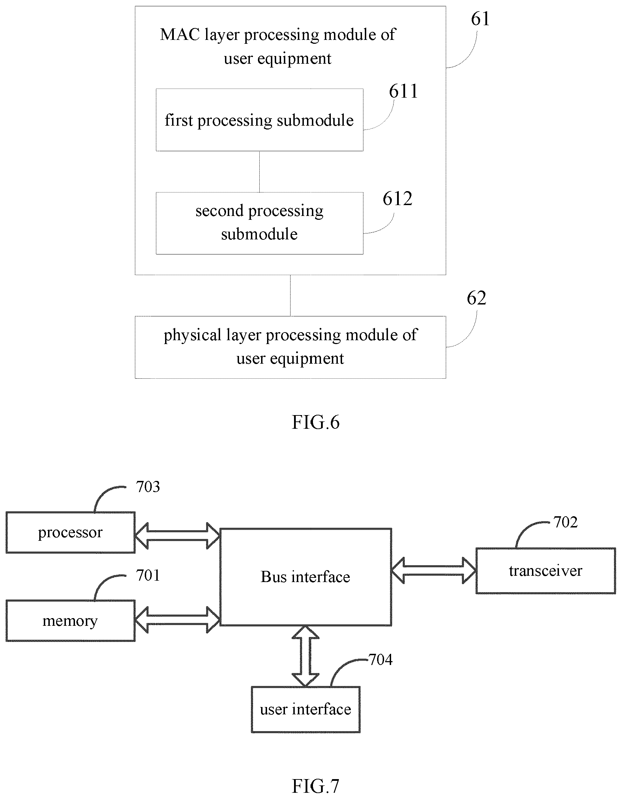

Referring to FIG. 6, an embodiment of the present disclosure also provides a data transmission apparatus, applied to user equipment, including: a MAC layer processing module 61 of the user equipment and a physical layer processing module 62 of the user equipment;
the MAC layer processing module 61 of the user equipment includes:
a first processing submodule 611, configured to submit a first data packet to the physical layer processing module 62 of the user equipment, and start a configured grant timer (CGT) and/or a configured grant retransmission timer (CGRT); and
a second processing submodule 612, configured to stop, in a case that transmission of the first data packet is stopped at the physical layer processing module 62 of the user equipment is identified, the CGT and/or the CGRT, and transmit the first data packet after stopping the CGT and/or the CGRT.

Optionally, the physical layer processing module of the user equipment is further configured to:
stop, in a case that a target scenario is detected when transmitting the first data packet, transmission of the first data packet, and feed back notification information to the MAC layer processing module of the user equipment,
wherein the MAC layer processing module of the user equipment identifies that transmission of the first data packet is stopped according to the notification information.

Optionally, the physical layer processing module of the user equipment includes one of the following submodules:
a first stop submodule, configured to stop, in a case that a second data packet meeting a preset condition is obtained when transmitting the first data packet, transmission of the first data packet;
a second stop submodule, configured to stop, in a case that a first indication information transmitted by a network device indicating that the transmission of the first data packet is interrupted is received when transmitting the first data packet, transmission of the first data packet;
a third stop submodule, configured to stop, in the case that a second indication information transmitted by the network device indicating that the user equipment changes a time slot is received when transmitting the first data packet, transmission of the first data packet.

Optionally, the first stop submodule is further configured for:
stopping transmission of the first data packet, in a case that a second media access control protocol data unit (MAC PDU) submitted or an uplink control information (UCI) generated by the MAC layer processing module of the user equipment is received when transmitting the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

Optionally, the physical layer processing module of the user equipment further includes:
a transmitting submodule, configured to transmit the second data packet after the first stop submodule stops the transmission of the first data packet.

Optionally, the second processing submodule includes:
a selection unit, configured to select a second target uplink resource from at least one uplink resource;
a control unit, configured to control the physical layer processing module of the user equipment to transmit the buffered first data packet to a network device through the second target uplink resource.

Optionally, the first data packet is transmitted to the network device for the first time through the first configured grant resource; the selection unit is further configured to:
select the second target uplink resource from at least one uplink resource according to at least one of a modulation and coding scheme (MCS) of the uplink resource and a reliability parameter of the uplink resource.

Optionally, the selection unit includes one of the following subunits:
a first selection subunit, configured to select the second target uplink resource whose MCS is lower than or equal to an MCS corresponding to the first configured grant resource from the at least one uplink resource;
a second selection subunit, configured to select the second target uplink resource whose reliability parameter is higher than or equal to a reliability parameter corresponding to the first configured grant resource from the at least one uplink resource; and
a third selection subunit, configured to select the second target uplink resource whose MCS is lower than or equal to the MCS corresponding to the first configured grant resource and whose reliability parameter is higher than or equal to the reliability parameter corresponding to the first configured grant resource from the at least one uplink resource;

Optionally, the MAC layer processing module of the user equipment further includes:
a first setting submodule, configured to set, after the first processing submodule starts the CGT and/or the CGRT, hybrid automatic repeat request (HARQ) process to a non-suspended state capable of transmitting;
a second setting submodule, configured to set, after the second processing submodule stops the CGT and/or the CGRT, the HARQ process to a suspended state in which data to be transmitted is buffered,
wherein the second processing submodule transmits the first data packet after the second setting submodule sets the HARQ process to the suspended state.

It should be noted that the division of the modules (units) in the embodiment of the present disclosure is schematic, and is only a logical function division, and there may be another division manner in actual implementation. In addition, each functional unit in each embodiment of the present disclosure may be integrated into one processing unit, each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on this understanding, the technical solution of the present disclosure is essentially or part of the contribution to the prior art, or all or part of the technical solution can be embodied in the form of a software product, and the computer software product is stored in a storage medium, including several instructions used for enabling a computer device (which may be a personal computer, server, or network device, etc.) or a processor (processor) to execute all or part of the steps of the methods described in various embodiments of the present disclosure. The aforementioned storage media includes: U disk, mobile hard disk, read-only memory (Read-Only Memory, ROM), random access memory (Random Access Memory, RAM), magnetic disk or optical disk and other media that can store program codes.

What needs to be explained here is that the above-mentioned apparatus provided by the embodiment of the present disclosure can realize all the method steps implemented by the above-mentioned method embodiment, and can achieve the same technical effect, parts and beneficial effects in this embodiment that are the same as those in the method embodiment will not be described in detail here.

An embodiment of the present disclosure also provides a user equipment, as shown in FIG. 7, the user equipment includes a memory 701, a transceiver 702, and a processor 703, wherein the memory 701 is configured for storing computer program; the transceiver 702 is configured for receiving and sending data under the control of the processor 703; and the processor 703 is configured for reading the computer program in the memory 701 and performing the following operations of:
controlling a media access control (MAC) layer of the user equipment to submit a first data packet to a physical layer of the user equipment, and controlling the MAC layer of the user equipment to start a configured grant timer (CGT) and/or a configured grant retransmission timer (CGRT); and
controlling the MAC layer of the user equipment to stop, in a case that transmission of the first data packet is stopped at the physical layer of the user equipment is identified, the CGT and/or the CGRT, and transmit the first data packet after stopping the CGT and/or the CGRT.

Optionally, the processor 703 is further configured for:
controlling the physical layer of the user equipment to stop, in a case that a target scenario is detected when transmitting the first data packet, transmission of the first data packet, and feed back notification information to the MAC layer of the user equipment, wherein the MAC layer of the user equipment identifies that transmission of the first data packet is stopped according to the notification information.

Optionally, in a case that the processor 703 controls the physical layer of the user equipment to stop the transmission of the first data packet, the processor is specifically configured to perform one of the following methods of:
controlling the physical layer of the user equipment to stop, in a case that a second data packet meeting a preset condition is obtained when transmitting the first data packet, transmission of the first data packet;
controlling the physical layer of the user equipment to stop, in a case that a first indication information transmitted by a network device indicating that the transmission of the first data packet is interrupted is received when transmitting the first data packet, transmission of the first data packet;
controlling the physical layer of the user equipment to stop, in the case that a second indication information transmitted by the network device indicating that the user equipment changes a time slot is received when transmitting the first data packet, transmission of the first data packet.

Optionally, when the processor 703 controls the physical layer of the user equipment to stop, in a case that the second data packet meeting the preset condition is obtained when transmitting the first data packet, transmission of the first data packet, the processor is specially configured for:
controlling the physical layer of the user equipment to stop, in a case that a second media access control protocol data unit (MAC PDU) submitted by the MAC layer of the user equipment or an uplink control information (UCI) generated at the physical layer of the user equipment is received when transmitting the first data packet, transmission of the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

Optionally, after the processor 703 controls the physical layer of the user equipment to stop, in a case that the second data packet meeting the preset condition is obtained when transmitting the first data packet, transmission of the first data packet, the processor is further configured for:
controlling the physical layer of the user equipment to transmit the second data packet.

Optionally, when the processor 703 controls the MAC layer of the user equipment to transmit the first data packet, the processor is specifically configured for:
controlling the MAC layer of the user equipment to select a second target uplink resource from at least one uplink resource; and controlling the physical layer of the user equipment to transmit the buffered first data packet to the network device through the second target uplink resource.

Optionally, the first data packet is transmitted to the network device for a first time through the first configured grant resource; when the processor 703 controls the MAC layer of the user equipment to select the second target uplink resource from at least one uplink resource, the processor is specially configured for:
controlling the MAC layer of the user equipment to select, according to at least one of a modulation and coding scheme (MCS) of the uplink resource and a reliability parameter of the uplink resource, the second target uplink resource from at least one uplink resource.

Optionally, the processor 703 controls the MAC layer of the user equipment to select, according to at least one of the modulation and coding scheme (MCS) of the uplink resource and the reliability parameter of the uplink resource, the second target uplink resource from at least one uplink resource, the processor is specially configured for performing one of the following methods of:
controlling the physical layer of the user equipment to select the second target uplink resource whose MCS is lower than or equal to an MCS corresponding to the first configured grant resource from the at least one uplink resource;
controlling the physical layer of the user equipment to select the second target uplink resource whose reliability parameter is higher than or equal to a reliability parameter corresponding to the first configured grant resource from the at least one uplink resource;
controlling the physical layer of the user equipment to select the second target uplink resource whose MCS is lower than or equal to the MCS corresponding to the first configured grant resource and whose reliability parameter is higher than or equal to the reliability parameter corresponding to the first configured grant resource from the at least one uplink resource.

Optionally, after the processor 703 controls the MAC layer of the user equipment to start the CGT and/or the CGRT, the processor is further configured for:
controlling the MAC layer of the user equipment to set hybrid automatic repeat request (HARQ) process to a non-suspended state capable of transmitting;
after the processor 703 controls the MAC layer of the user equipment to stop the CGT and/or the CGRT, the processor is further configured for:
   controlling the MAC layer of the user equipment to set the HARQ process to a suspended state in which data to be transmitted is buffered,
   wherein the processor 703 controls the MAC layer of the user equipment to transmit the first data packet after setting the HARQ process to the suspended state.

In FIG. 7, the bus architecture may include any number of interconnected buses and bridges, specifically one or more processors represented by the processor 703 and various circuits of the memory represented by the memory 701 are linked together. The bus architecture can also link together various other circuits such as peripherals, voltage regulators, and power management circuits, etc., which are well known in the art and therefore will not be further described herein. The bus interface provides the interface. The transceiver 702 may be a plurality of elements, including a transmitter and a receiver, which provides a unit for communicating with various other devices over transmission media, these transmission media includes wireless channels, wired channels, optical cables, and other transmission media. For different user equipments, the user interface 704 may also be an interface capable of connecting externally and internally to required equipment, and the connected equipment includes but not limited to a keypad, a display, a speaker, a microphone, a joystick, and the like.

The processor 703 is responsible for managing the bus architecture and general processing, and the memory 701 can store data used by the processor 703 when performing operations.

The processor 703 may be a central processor (CPU), an application specific integrated circuit (Application Specific Integrated Circuit, ASIC), a field programmable gate array (Field-Programmable Gate Array, FPGA) or a complex programmable logic device (Complex Programmable Logic Device, CPLD), and the processor can also use a multi-core architecture.

The processor is configured for executing any one of the methods provided by the embodiments of the present disclosure according to the obtained executable instructions by calling the computer program stored in the memory. The processor and memory may also be physically separated.

What needs to be explained here is that the above-mentioned device provided by the embodiment of the present disclosure can realize all the method steps realized by the above-mentioned method embodiment, and can achieve the same technical effect. Parts and beneficial effects in this embodiment that are the same as those in the method embodiment will not be described in detail here.

An embodiment of the present disclosure also provides a processor-readable storage medium, wherein a computer program is stored in the processor-readable storage medium, and the computer program is configured for enabling the processor to execute the data transmission method.

The processor-readable storage medium can be any available medium or data storage device that can be accessed by a processor, including but not limited to magnetic storage (such as floppy disk, hard disk, magnetic tape, magneto-optical disk (MO), etc.), optical storage (such as CD, DVD, BD, HVD, etc.), and semiconductor memory (such as ROM, EPROM, EEPROM, non-volatile memory (NAND FLASH), solid-state drive (SSD)), etc.

An embodiment of the present disclosure also provides a computer program, including computer readable codes, which enables, when the computer readable codes are run on a computing processing device, the computing processing device to execute the above-mentioned data transmission method.

Those skilled in the art should understand that the embodiments of the present disclosure may be provided as methods, systems, or computer program products. Accordingly, the present disclosure can take the form of an entirely hardware embodiment, an entirely software embodiment, or an embodiment combining software and hardware aspects. Furthermore, the present disclosure may take the form of a computer program product embodied on one or more computer-usable storage media (including but not limited to magnetic disk storage, optical storage, etc.) having computer-usable program code embodied therein.

The present disclosure is described with reference to flowchart illustrations and/or block diagrams of methods, devices (systems), and computer program products according to embodiments of the present disclosure. It should be understood that each procedure and/or block in the flowchart and/or block diagrams, and combinations of procedures and/or blocks in the flowchart and/or block diagrams can be implemented by computer-executable instructions. These computer-executable instructions can be provided to a general-purpose computer, special-purpose computer, embedded processor, or processor of other programmable data processing equipment to generate a machine, such that instructions executed by the processor of the computer or other programmable data processing equipment produce an apparatus for realizing the functions specified in one or more procedures of a flowchart and/or one or more blocks of a block diagram.

These processor-executable instructions may also be stored in a processor-readable memory capable of directing a computer or other programmable data processing device to operate in a specific manner, such that the instructions stored in the processor-readable memory produce a manufacturing product including instruction device, the instruction device realizes the function specified in one or more procedures of the flow chart and/or one or more blocks of the block diagram.

These processor-executable instructions can also be loaded onto a computer or other programmable data processing device, which enables a series of operational steps to be performed on the computer or other programmable device to produce a computer-implemented process, whereby the instructions executed on the computer or other programmable device provide the steps for implementing the function specified in one or more procedures of the flow chart and/or one or more blocks of the block diagram.

The device embodiments described above are only illustrative, and the units described as separate components may or may not be physically separated, and the components shown as units may or may not be physical units, that is, they may be located in one place, or can be distributed to multiple network elements. Part or all of the modules can be selected according to actual needs to achieve the purpose of the solution of this embodiment. It can be understood and implemented by those skilled in the art without any creative efforts.

The various component embodiments of the present disclosure may be implemented in hardware, or in software modules running on one or more processors, or in a combination thereof. Those skilled in the art should understand that a microprocessor or a digital signal processor (DSP) may be used in practice to implement some or all functions of some or all components in the computing processing device according to the embodiments of the present disclosure. The present disclosure can also be implemented as a device or apparatus program (eg, computer program and computer program product) for performing a part or all of the methods described herein. Such a program realizing the present disclosure may be stored on a computer-readable medium, or may have the form of one or more signals. Such a signal may be downloaded from an Internet site, or provided on a carrier signal, or provided in any other form.

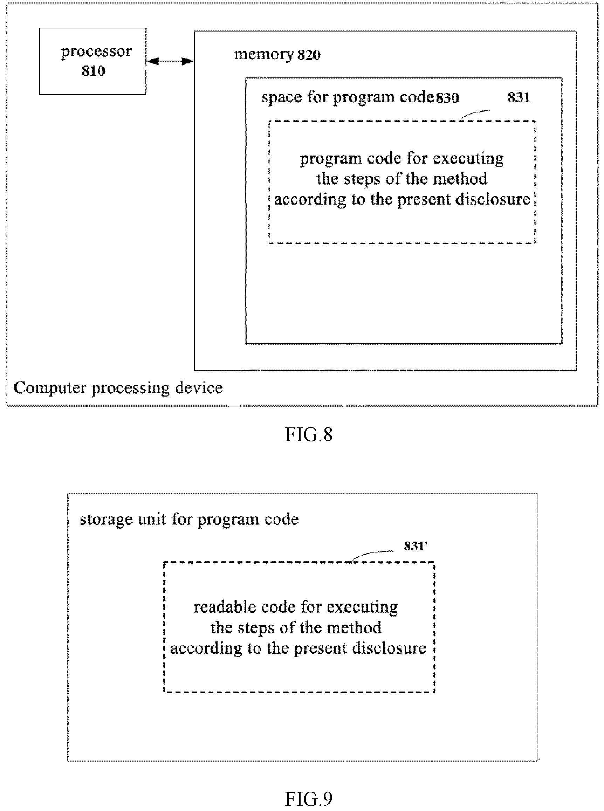

For example, FIG. 8 illustrates a computing processing device that may implement methods according to the present disclosure. The computing processing device conventionally includes a processor 810 and a computer program product or computer readable medium in the form of memory 820. Memory 820 may be electronic memory such as flash memory, EEPROM (Electrically Erasable Programmable Read Only Memory), EPROM, hard disk, or ROM. The memory 820 has storage space 830 for program code 831 for performing any of the method steps in the methods described above. For example, the storage space 830 for program codes may include respective program codes 831 for respectively implementing various steps in the above-mentioned methods. These program codes can be read from or written into one or more computer program products. These computer program products include program code carriers such as hard disks, compact disks (CDs), memory cards or floppy disks. Such a computer program product is typically a portable or fixed storage unit as described with reference to FIG. 9. The storage unit may have storage segments, storage spaces, etc. arranged similarly to the memory 820 in the computing processing device of FIG. 8, for example, the program code may be compressed in a suitable form. Generally, the storage unit includes computer readable code 831', i.e. code readable by, for example, a processor such as 810, which code enables, when executed by a computing processing device, the computing processing device to perform the steps in the methods described above.

Reference herein to "one embodiment," "an embodiment," or "one or more embodiments" means that a particular feature, structure, or characteristic described in connection with the embodiment is included in at least one embodiment of the present disclosure. Additionally, it should be noted that examples of the word "in one embodiment" herein do not necessarily all refer to the same embodiment.

In the description provided herein, numerous specific details are described. However, it is understood that embodiments of the present disclosure may be practiced without these specific details. In some examples, in order not to obscure the understanding of the present disclosure, well-known methods, structures and techniques have not been shown in detail.

In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The disclosure can be implemented by means of hardware comprising several different elements, and by means of a suitably programmed computer. In a unit claim enumerating several apparatuses, several of these apparatuses can be embodied by the same item of hardware. The use of the words first, second, and third, etc. does not indicate any order. These words can be interpreted as names.

Finally, it should be noted that: the above-mentioned embodiments are only used to illustrate the technical solutions of the present disclosure, rather than to limit them; although the present disclosure has been described in detail with reference to the foregoing embodiments, those ordinarily skilled in the art should understand that: it is still possible to modify the technical solutions described in the foregoing embodiments, or perform equivalent replacements on some the technical features therein; and these modifications or replacements do not make the essence of the corresponding technical solutions deviate from the spirit and scope of the technical solutions of the embodiments in the present disclosure.

## Claims

1. A data transmission method, applied to a user equipment, comprising:
delivering, by a media access control (MAC) layer of the user equipment, a first data packet to a physical layer of the user equipment, and starting a configured grant timer (CGT) and/or a configured grant retransmission timer (CGRT);
stopping the CGT and/or the CGRT, and transmitting the first data packet after stopping the CGT and/or the CGRT, in a case that the MAC layer of the user equipment identifies that transmission of the first data packet is stopped at the physical layer of the user equipment.

2. The data transmission method according to claim 1, further comprising:
in a case that a target scenario is detected when transmitting the first data packet at the physical layer of the user equipment, stopping transmission of the first data packet, and feeding back notification information to the MAC layer of the user equipment,
wherein the MAC layer of the user equipment identifies that transmission of the first data packet is stopped according to the notification information.

3. The data transmission method according to claim 2, wherein in a case that the target scenario is detected when transmitting the first data packet at the physical layer, stopping transmission of the first data packet, comprises one of:
in a case that a second data packet meeting a configured condition is obtained when transmitting the first data packet at the physical layer of the user equipment, stopping,, transmission of the first data packet;
in a case that a first indication information transmitted by a network device indicating that the transmission of the first data packet is interrupted is received when transmitting the first data packet at the physical layer of the user equipment, stopping transmission of the first data packet;
in the case that a second indication information transmitted by the network device indicating that the user equipment changes a time slot is received when transmitting the first data packet at the physical layer of the user equipment, stopping transmission of the first data packet.

4. The data transmission method according to claim 3, wherein in a case that the second data packet meeting the preset condition is obtained when transmitting the first data packet at the physical layer of the user equipment, stopping transmission of the first data packet, comprises:
in a case that a second media access control protocol data unit (MAC PDU) submitted by the MAC layer of the user equipment or an uplink control information (UCI) generated at the physical layer of the user equipment is received when transmitting the first data packet at the physical layer of the user equipment, stopping transmission of the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

5. The data transmission method according to claim 3, wherein in a case that the second data packet meeting the preset condition is obtained when transmitting the first data packet at the physical layer of the user equipment, after the stopping transmission of the first data packet, the method further comprises:
transmitting the second data packet by the physical layer of the user equipment.

6. The data transmission method according to any one of claims 1 to 5, wherein the transmission of the first data packet comprises:
selecting, by the MAC layer of the user equipment, a second target uplink resource from at least one uplink resource; and
transmitting, by the physical layer of the user equipment, the buffered first data packet to the network device through the second target uplink resource.

7. The data transmission method according to claim 6, wherein the first data packet is transmitted to the network device for a first time through the first configured grant resource;
the selecting, by the MAC layer of the user equipment, the second target uplink resource from at least one uplink resource, comprises:
selecting, by the MAC layer of the user equipment, the second target uplink resource from at least one uplink resource according to at least one of a modulation and coding scheme (MCS) of the uplink resource and a reliability parameter of the uplink resource.

8. The data transmission method according to claim 7, wherein the selecting, by the MAC layer of the user equipment, the second target uplink resource from at least one uplink resource according to at least one of the modulation and coding scheme (MCS) of the uplink resource and the reliability parameter of the uplink resource, comprises one of:
selecting, by the MAC layer of the user equipment, the second target uplink resource whose MCS is lower than or equal to an MCS corresponding to the first configured grant resource from the at least one uplink resource;
selecting, by the MAC layer of the user equipment, the second target uplink resource whose reliability parameter is higher than or equal to a reliability parameter corresponding to the first configured grant resource from the at least one uplink resource;
selecting, by the MAC layer of the user equipment, the second target uplink resource whose MCS is lower than or equal to the MCS corresponding to the first configured grant resource and whose reliability parameter is higher than or equal to the reliability parameter corresponding to the first configured grant resource from the at least one uplink resource;

9. The data transmission method according to claim 1, wherein after the starting, by the MAC layer of the user equipment, the CGT and/or the CGRT, the method further comprises:
setting, by the MAC layer of the user equipment, hybrid automatic repeat request (HARQ) process to a non-suspended state capable of transmitting;
after the stopping, by the MAC layer of the user equipment, the CGT and/or the CGRT, the method further comprises:
setting, by the MAC layer of the user equipment, the HARQ process to a suspended state in which data to be transmitted is buffered,
wherein the MAC layer of the user equipment transmits the first data packet after setting the HARQ process to the suspended state.

10. A user equipment, comprising a memory, a transceiver, and a processor, wherein the memory is configured for storing computer program; the transceiver is configured for sending and receiving data under control of the processor; and the processor is configured for reading the computer program in the memory and performing the following operations of:
controlling a media access control (MAC) layer of the user equipment to submit a first data packet to a physical layer of the user equipment, and controlling the MAC layer of the user equipment to start a configured grant timer (CGT) and/or a configured grant retransmission timer (CGRT);
controlling the MAC layer of the user equipment to stop, in a case that transmission of the first data packet is stopped at the physical layer of the user equipment is identified, the CGT and/or the CGRT, and transmit the first data packet after stopping the CGT and/or the CGRT.

11. The user equipment according to claim 10, wherein the processor is further configured for:
controlling the physical layer of the user equipment to stop, in a case that a target scenario is detected when transmitting the first data packet, transmission of the first data packet, and feed back notification information to the MAC layer of the user equipment,
wherein the MAC layer of the user equipment identifies that transmission of the first data packet is stopped according to the notification information.

12. The user equipment according to claim 11, wherein in a case that the processor controls the physical layer of the user equipment to stop the transmission of the first data packet, the processor is configured to perform one of the following methods of:
controlling the physical layer of the user equipment to stop, in a case that a second data packet meeting a preset condition is obtained when transmitting the first data packet, transmission of the first data packet;
controlling the physical layer of the user equipment to stop, in a case that a first indication information transmitted by a network device indicating that the transmission of the first data packet is interrupted is received when transmitting the first data packet, transmission of the first data packet;
controlling the physical layer of the user equipment to stop, in the case that a second indication information transmitted by the network device indicating that the user equipment changes a time slot is received when transmitting the first data packet, transmission of the first data packet.

13. The user equipment according to claim 12, wherein when the processor controls the physical layer of the user equipment to stop, in a case that the second data packet meeting the preset condition is obtained when transmitting the first data packet, transmission of the first data packet, the processor is specially configured for:
controlling the physical layer of the user equipment to stop, in a case that a second media access control protocol data unit (MAC PDU) submitted by the MAC layer of the user equipment or an uplink control information (UCI) generated at the physical layer of the user equipment is received when transmitting the first data packet, transmission of the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

14. The user equipment according to claim 12, wherein after the processor controls the physical layer of the user equipment to stop, in a case that the second data packet meeting the preset condition is obtained when transmitting the first data packet, transmission of the first data packet, the processor is further configured for:
controlling the physical layer of the user equipment to transmit the second data packet.

15. The user equipment according to any one of claims 10 to 14, wherein when the processor controls the MAC layer of the user equipment to transmit the first data packet, the processor is configured for:
controlling the MAC layer of the user equipment to select a second target uplink resource from at least one uplink resource; and
controlling the physical layer of the user equipment to transmit the buffered first data packet to the network device through the second target uplink resource.

16. The user equipment according to claim 15, wherein the first data packet is transmitted to the network device for a first time through the first configured grant resource;
when the processor controls the MAC layer of the user equipment to select the second target uplink resource from at least one uplink resource, the processor is specially configured for:
controlling the MAC layer of the user equipment to select, according to at least one of a modulation and coding scheme (MCS) of the uplink resource and a reliability parameter of the uplink resource, the second target uplink resource from at least one uplink resource.

17. The user equipment according to claim 16, wherein the processor controls the MAC layer of the user equipment to select, according to at least one of the modulation and coding scheme (MCS) of the uplink resource and the reliability parameter of the uplink resource, the second target uplink resource from at least one uplink resource, the processor is specially configured for performing one of the following methods of:
controlling the physical layer of the user equipment to select the second target uplink resource whose MCS is lower than or equal to an MCS corresponding to the first configured grant resource from the at least one uplink resource;
controlling the physical layer of the user equipment to select the second target uplink resource whose reliability parameter is higher than or equal to a reliability parameter corresponding to the first configured grant resource from the at least one uplink resource;
controlling the physical layer of the user equipment to select the second target uplink resource whose MCS is lower than or equal to the MCS corresponding to the first configured grant resource and whose reliability parameter is higher than or equal to the reliability parameter corresponding to the first configured grant resource from the at least one uplink resource;

18. The user equipment according to claim 10, wherein after the processor controls the MAC layer of the user equipment to start the CGT and/or the CGRT, the processor is further configured for:
controlling the MAC layer of the user equipment to set hybrid automatic repeat request (HARQ) process to a non-suspended state capable of transmitting;
after the processor controls the MAC layer of the user equipment to stop the CGT and/or the CGRT, the processor is further configured for:
controlling the MAC layer of the user equipment to set the HARQ process to a suspended state in which data to be transmitted is buffered,
wherein the processor controls the MAC layer of the user equipment to transmit the first data packet after setting the HARQ process to the suspended state.

19. A data transmission apparatus, applied to a user equipment, comprising: a media access control (MAC) layer processing module of the user equipment and a physical layer processing module of the user equipment, wherein
the MAC layer processing module of the user equipment comprises:
a first processing submodule, configured to submit a first data packet to the physical layer processing module of the user equipment, and start a configured grant timer (CGT) and/or a configured grant retransmission timer (CGRT); and
a second processing submodule, configured to stop, in a case that transmission of the first data packet is stopped at the physical layer processing module of the user equipment is identified, the CGT and/or the CGRT, and transmit the first data packet after stopping the CGT and/or the CGRT.

20. The apparatus according to claim 19, wherein the physical layer processing module of the user equipment is further configured to:
stop, in a case that a target scenario is detected when transmitting the first data packet, transmission of the first data packet, and feed back notification information to the MAC layer processing module of the user equipment,
wherein the MAC layer processing module of the user equipment identifies that transmission of the first data packet is stopped according to the notification information.

21. The apparatus according to claim 20, wherein the physical layer processing module of the user equipment comprises one of the following submodules:
a first stop submodule, configured to stop, in a case that a second data packet meeting a preset condition is obtained when transmitting the first data packet, transmission of the first data packet;
a second stop submodule, configured to stop, in a case that a first indication information transmitted by a network device indicating that the transmission of the first data packet is interrupted is received when transmitting the first data packet, transmission of the first data packet;
a third stop submodule, configured to stop, in the case that a second indication information transmitted by the network device indicating that the user equipment changes a time slot is received when transmitting the first data packet, transmission of the first data packet.

22. The apparatus according to claim 20, wherein the first stop submodule is further configured for:
stopping transmission of the first data packet, in a case that a second media access control protocol data unit (MAC PDU) submitted or an uplink control information (UCI) generated by the MAC layer processing module of the user equipment is received when transmitting the first data packet,
wherein the second data packet is the second MAC PDU or the UCI, the first data packet is the first MAC PDU, the first data packet is transmitted to the network device through a first configured grant resource, and the second data packet is transmitted to the network device through a first target uplink resource, a priority of the second data packet is higher than a priority of the first data packet and/or a priority of the first target uplink resource is higher than a priority of the first configured grant resource.

23. A processor-readable storage medium, wherein the processor-readable storage medium stores a computer program, and the computer program is configured for enabling the processor to execute the data transmission method according to any one of claims 1 to 9.

24. A computer program, comprising computer readable code, wherein the computer readable code enables, when operated on a computing processing device, the computing processing device to execute the data transmission method according to any one of claims 1 to 9.
